# EUROPÄISCHE PATENTSCHRIFT

(11) **EP 0 616 718 B1**
(45) Veröffentlichungstag und Bekanntmachung des Hinweises auf die Patenterteilung: **22.01.1997**
(21) Anmeldenummer: 92924623.9
(22) Anmeldetag: 28.11.1992
(51) Int. Cl.: G11B 7/135, G11B 11/10, G11B 13/04

(54) **OPTISCHE ABTASTVORRICHTUNG**
OPTICAL SCANNING DEVICE
DISPOSITIF DE BALAYAGE OPTIQUE

(30) Priorität: 11.12.1991 DE 4140806
(43) Veröffentlichungstag der Anmeldung: 28.09.1994
(73) Patentinhaber: DEUTSCHE THOMSON-BRANDT GMBH, 78048 Villingen-Schwenningen (DE)
(72) Erfinder: MORIMOTO, Yasuaki, 1550-2, Rokusaki Sakurashi Shiba Pref. (JP)
(86) Internationale Anmeldenummer: EP9202761
(87) Internationale Veröffentlichungsnummer: WO9312523

(56) Entgegenhaltungen:
- DE-A- 3 732 874
- APPLIED OPTICS, Band 25, No. 22, November 1986, Kenji Torazawa et al, "Erasable digital audio disk system seite 3990-3995"
- Patent Abstracts of Japan, Band 13, Nr 322, P-902, & JP,A,1- 88943
- Patent Abstracts of Japan, Band 10, Nr 102, P-448, & JP,A, 60-234235

## Beschreibung

Die vorliegende Erfindung betrifft eine optische Abtastvorrichtung, die sowohl zum Lesen eines optischen als auch eines magneto-optischen Aufzeichnungsträgers sowie einer Kombination von optischem und magneto-optischem Aufzeichnungsträger geeignet ist, auf dem Daten übereinander sowohl in einer magnetischen Schicht als auch mittels sogenannter Pits gespeichert sind, wobei der Lichtstrahl einer Lichtquelle auf den Aufzeichnungsträger fokussiert und vom Aufzeichnungsträger eine erste λ/2-Platte durchstrahlend zu einem ersten Polarisationsstrahlteiler reflektiert wird, der den Lichtstrahl in Abhängigkeit von seiner Polarisationsrichtung auf einen ersten oder zweiten Photodetektor lenkt, wobei der Ausgang des ersten und des zweiten Photodetektors mit den Eingängen eines ersten Differenzverstärkers verbunden sind. Eine solche Vorrichtung ist aus DE-A-3.732.874 bekannt.

Ein bekannter optischer Aufzeichnungsträger ist z.B. die CD-Platte, bei der auf die lichtdurchlässige Schicht eine lichtreflektierende Aluminiumschicht folgt. Die lichtreflektierende Aluminiumschicht weist Vertiefungen, sogenannte Pits, auf, welche die auf der CD-Platte gespeicherten Daten darstellen. Mittels einer optischen Abtastvorrichtung sind die Daten von der CD-Platte lesbar, weil das Reflexionsverhalten der lichtreflektierenden Aluminiumschicht von dem Muster abhängt, das die Vertiefungen auf der Platte bilden. Von einer Vertiefung, häufig auch groove genannt, wird weniger Licht reflektiert als von einem Hügel, der oft auch als land bezeichnet wird.

An der Intensität des von der CD-Platte reflektierten Lichts erkennt daher die optische Abtastvorrichtung, ob es sich bei dem abgetasteten Bit z.B. um eine logische Eins oder eine logische Null handelt.

Ein weiterer derartiger optischer Aufzeichnungsträger, unter der Bezeichnung magneto-optische Platte bekannt, ist in dem Aufsatz "Magnetooptische Versuche dauern an" in Funkschau 13, 20. Juni 1986, auf Seite 37 - 41 beschrieben.

Im Gegensatz zu einer herkömmlichen CD-Platte weist eine magneto-optische Platte keine Pits auf. Hinter der lichtdurchlässigen Schicht befindet sich eine magnetische Schicht, in die Daten aufzeichenbar und von der Daten lesbar sind. Es wird zunächst erläutert, wie Daten auf eine magneto-optische Platte geschrieben werden.

Mittels eines auf die Platte fokussierten Laserstrahls wird die magnetische Schicht über die Curie-Temperatur erhitzt. Meist genügt es jedoch, die magnetische Schicht nur bis zu der etwas unterhalb der Curie-Temperatur liegenden Kompensationstemperatur zu erwärmen. Hinter dem Brennpunkt auf der Platte ist ein Elektromagnet angeordnet, der den vom Laserstrahl erhitzten Bereich in die eine oder andere Magnetisierungsrichtung magnetisiert. Weil nach Abschalten des Laserstrahls die erhitzte Stelle wieder unter die Curie-Temperatur abkühlt, bleibt die vom Elektromagneten festgelegte Magnetisierungsrichtung erhalten; sie friert sozusagen ein. Auf diese Weise werden die einzelnen Bits in Domänen unterschiedlicher Magnetisierungsrichtung gespeichert. Dabei entspricht z.B. die eine Magnetisierungsrichtung einer Domäne einer logischen Eins, während die entgegengesetzte Magnetisierungsrichtung eine logische Null darstellt.

Zum Lesen der Daten macht man sich den Kerr-Effekt zunutze. Die Polarisationsebene eines linear polarisierten Lichtstrahls wird bei der Reflexion an einem magnetisierten Spiegel um einen meßbaren Winkel gedreht. Je nachdem, in welche Richtung der Spiegel magnetisiert ist, wird die Polarisationsebene des reflektierten Lichtstrahls nach rechts oder nach links gedreht. Weil aber die einzelnen Domänen auf der Platte wie magnetisierte Spiegel wirken, wird die Polarisationsebene eines abtastenden Lichtstrahls je nach der Magnetisierungsrichtung der gerade abgetasteten Domäne um einen meßbaren Winkel nach links oder rechts gedreht.

An der Drehung der Polarisationsebene des von der Platte reflektierten Lichtstrahls erkennt die optische Abtastvorrichtung, welches Bit vorliegt, eine logische Eins oder eine logische Null. Im Gegensatz zu einer CD-Platte mit Pits ist eine magneto-optische Platte nahezu beliebig oft lösch- und wieder beschreibbar.

Aus der DE-A-37 32 875 ist ein plattenförmiger Aufzeichnungsträger bekannt, der eine Kombination aus einer optischen und einer magneto-optischen Platte darstellt. Auf diesem Aufzeichnungsträger sind sowohl Daten mittels Pits als auch in der magnetischen Schicht der Platte gespeichert. Weil die Pits und die magnetischen Domänen übereinander liegen, sind an ein und derselben Stelle sowohl Daten in Form von Pits als auch in der magnetischen Schicht gespeichert. Das Speichervermögen dieser Platte ist daher doppelt so groß wie das einer normalen optischen Platte oder einer magneto-optischen Platte.

In der DE-A-37 32 874 ist eine optische Abtastvorrichtung erläutert, die für die drei angeführten Plattentypen geeignet ist, denn diese optische Abtastvorrichtung vermag sowohl Daten von einer optischen Platte, z.B. einer Compact-Disc, einer magneto-optischen Platte als auch von einer Platte lesen, die aus der DE-A-37 32 875 bekannt ist.

Bei dieser optischen Abtastvorrichtung wird das Licht eines Lasers auf die Platte fokussiert und von dort zu einem Polarisationsstrahlteiler reflektiert, der es in Abhängigkeit von seiner Polarisationsrichtung entweder auf einen ersten oder einen zweiten Photodetektor reflektiert. Aus der Differenz der Photospannungen des ersten und des zweiten Photodetektors wird das Datensignal gewonnen, das in den magnetischen Domänen der Platte gespeichert ist. Aus der Summe der Photospannungen des ersten und des zweiten Photodetektors wird dasjenige Datensignal erzeugt, das die mittels der Pits auf der Platte gespeicherten Daten wiedergibt. Die in der DE-A-37 32 874 beschriebene optische Abtastvorrichtung kann bei einer Platte, wie sie in der DE-A-37 32 875 angegeben ist, gleichzeitig sowohl die mittels der Pits als auch die in den magnetischen Domänen gespeicherten Daten lesen.

Weil aber die Pits ebenfalls eine - wenn auch nur sehr geringe - Drehung der Polarisationsrichtung des vom Laser abgestrahlten Lichts verursachen, läßt sich Nebensprechen zwischen dem durch Abtasten der Pits gewonnenen Datensignal und dem mit Hilfe des Kerr-Effektes aus den magnetischen Domänen gelesenen Datensignals nicht vollständig vermeiden.

Es ist deshalb Aufgabe der Erfindung, das unerwünschte Nebensprechen mit einfachen Mitteln möglichst vollständig zu unterdrücken.

Die Erfindung löst diese Aufgabe dadurch, daß der Aufzeichnungsträger den Lichtstrahl eine zweite λ/2-Platte und eine λ/4-Platte durchstrahlend zu einem zweiten Polarisationsstrahlteiler reflektiert, der den Lichtstrahl in Abhängigkeit von seiner Polarisationsrichtung auf einen dritten oder vierten Photodetektor lenkt, daß der Ausgang des dritten und des vierten Photodetektors mit den Eingängen eines zweiten Differenzverstärkers verbunden sind, daß der Ausgang des ersten Differenzverstärkers mit dem nichtinvertierenden Eingang eines dritten Differenzverstärkers verbunden ist, an dessen Ausgang das aus der magnetischen Schicht des Aufzeichnungsträgers gewonnene Datensignal abnehmbar ist und daß der Ausgang des zweiten Differenzverstärkers mit dem invertierenden Eingang des dritten Differenzverstärkers verbunden ist.

Es zeigen
- Figur 1: ein Ausführungsbeispiel der Erfindung;
- Figur 2: einen Querschnitt durch eine magneto-optische Platte mit Pits;
- Figur 3: das mit Nebensprechen behaftete magneto-optische Datensignal.
- Figur 4: Ausgangssignal ES des Differenzverstärkers DV2
- Figur 5: Magneto-optisches Datensignal MS

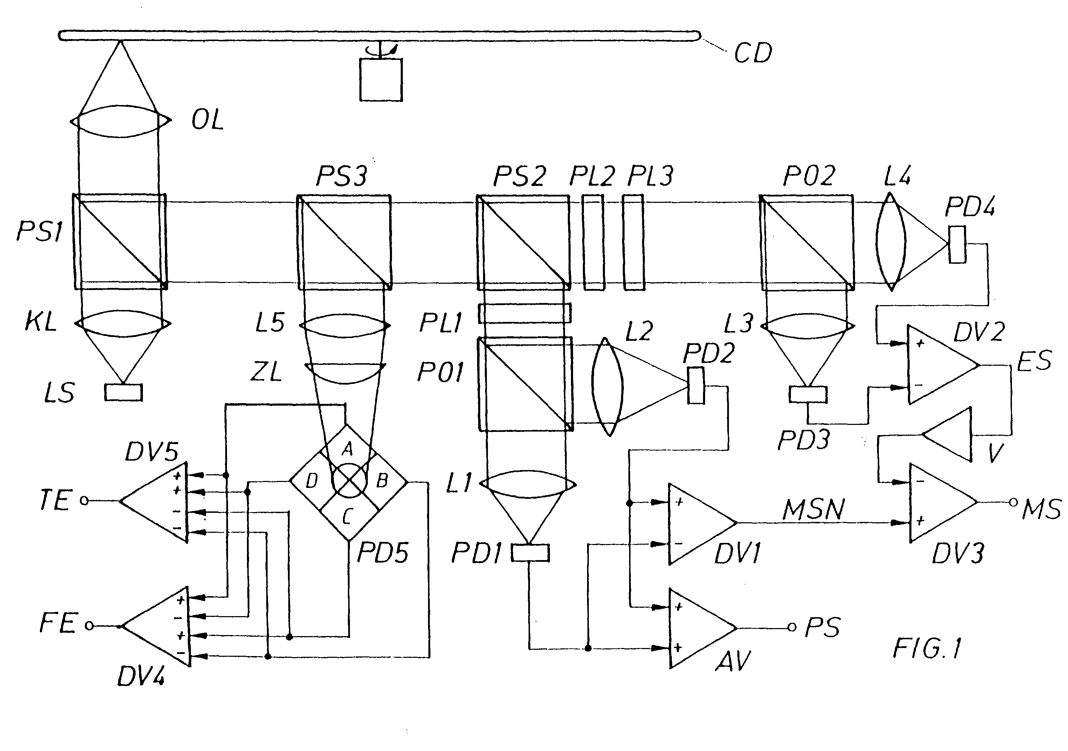

Es wird nun der Aufbau des in Figur 1 gezeigten Ausführungsbeispieles beschrieben.

Der von einer Lichtquelle, z.B. von einem Laser LS, erzeugte Lichtstrahl strahlt durch eine Kollimatorlinse KL, einen Prismenstrahlteiler PS1 und eine 0bjektivlinse OL auf einen magneto-optischen Aufzeichnungsträger CD, auf dem Daten übereinander in einer magnetischen Schicht und mittels Pits gespeichert sind. Mittels der Objektivlinse OL wird der Lichtstrahl auf den plattenförmigen magneto-optischen Aufzeichnungsträger CD fokussiert, der im weiteren Verlauf als magneto-optische Platte bezeichnet wird.

Die magneto-optische Platte CD reflektiert den Lichtstrahl zurück zur Objektivlinse OL und zum Prismenstrahlteiler PS1, der ihn rechtwinklig zu einem Prismenstrahlteiler PS3 ablenkt. Der Prismenstrahlteiler PS3 lenkt einen Lichtstrahl rechtwinklig ab, der eine Linse L5 und eine Zylinderlinse ZL durchstrahlend auf einen Vierquadrantenphotodetektor PD5 trifft, der aus vier Photodioden A, B, C und D aufgebaut ist. Ein Lichtstrahl strahlt geradlinig durch den Prismenstrahlteiler PS3 hindurch zu einem Prismenstrahlteiler PS2 und weiter durch eine λ/2-Platte und eine λ/4-Platte zu einem Polarisationsstrahlteiler PO2. Ein Lichtstrahl wird vom Prismenstrahlteiler PS2 rechtwinklig abgelenkt zu einer λ/2-Platte, von wo der Lichtstrahl weiter zu einem Polarisationsstrahlteiler PO1 strahlt. Der Polarisationsstrahlteiler PO1 lenkt den Lichtstrahl in Abhängigkeit von seiner Polarisationsrichtung entweder eine Linse L1 durchstrahlend zu einem Photodetektor PD1 oder eine Linse L2 durchstrahlend zu einem Photodetektor PD2. Der Polarisationsstrahlteiler PO2 richtet den von der λ/4-Platte PL3 kommenden Lichtstrahl in Abhängigkeit von seiner Polarisationsrichtung entweder eine Linse L3 durchstrahlend zu einem Photcdetektor PD3 oder eine Linse L4 durchstrahlend zu einem Photodetektor PD4.

Die Ausgänge der beiden sich diagonal gegenüberliegenden Photodioden A und C des Vierquadrantenphotodetektors PD5 sind mit je einem Additionseingang eines Differenzverstärkers DV4 verbunden, während die anderen beiden sich diagonal gegenüberliegenden Photodioden B und D mit den Subtraktionseingängen des Differenzverstärkers DV4 verbunden sind. Die beiden nebeneinanderliegenden Photodioden A und D des Vierquadrantenphotodetektors PD5 sind mit den Additionseingängen eines Differenzverstärkers DV5 verbunden; die anderen beiden nebeneinanderliegenden Photodioden C und B des Vierquadrantenphotodetektors PD5 sind mit den Subtraktionseingängen des Differenzverstärkers DV5 verbunden.

Der Ausgang des Photodetektors PD1 ist mit dem invertierenden Eingang eines Differenzverstärkers DV1 und mit dem ersten Eingang eines Additionsverstärkers AV verbunden. Der Ausgang des Photodetektors PD2 ist mit dem nichtinvertierenden Eingang des Differenzverstärkers DV1 und dem zweiten Eingang des Additionsverstärkers AV verbunden.

Der Ausgang des Photodetektors PD 3 ist mit dem invertierenden Eingang eines Differenzverstärkers DV2 verbunden, dessen nichtinvertierender Eingang mit dem Ausgang des Photodetektors PD4 verbunden ist. Der Ausgang des Differenzverstärkers DV2 ist mit dem Eingang eines Verstärkers V verbunden, dessen Ausgang mit dem invertierenden Eingang eines Differenzverstärkers DV3 verbunden ist. Der Ausgang des Differenzverstärkers DV1 ist mit dem nichtinvertierenden Eingang des Differenzverstärkers DV3 verbunden.

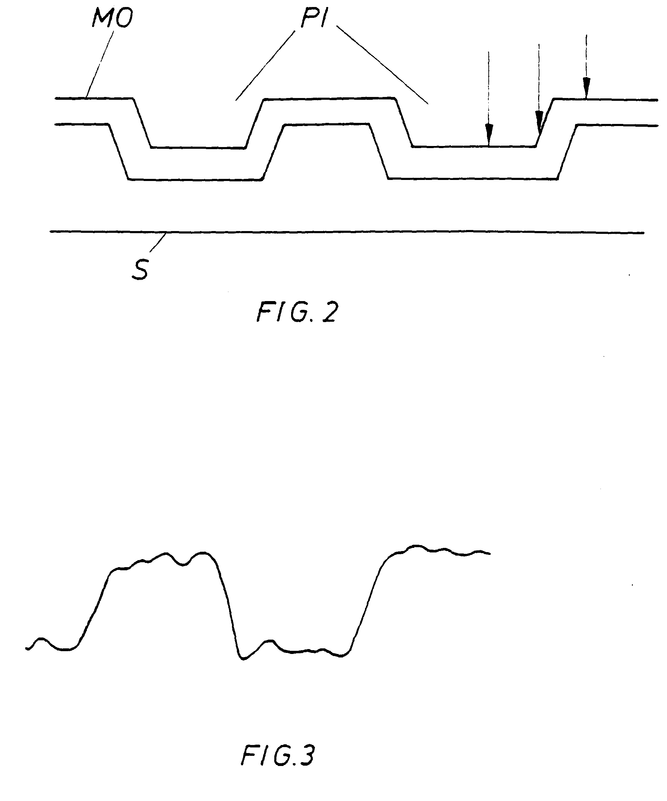

Anhand des in Figur 2 gezeigten Querschnittes durch einen magneto-optischen Aufzeichnungsträger, auf dem Daten übereinander sowohl in einer magnetischen Schicht als auch mittels Pits gespeichert sind, wird das Entstehen des Nebensprechens erläutert.

Auf der magneto-optischen Platte ist hinter einer magneto-optischen Schicht eine Substratschicht angeordnet. Die magneto-optische Schicht ist aber nicht wie bei einer gewöhnlichen magneto-optischen Platte eben, sondern sie enthält Vertiefungen, sogenannte Pits, die der Datenspeicherung wie bei einer optischen Kompaktplatte dienen. Wenn nun das vom Laser ausgestrahlte linear polarisierte Licht an der magneto-optischen Schicht MO der Platte reflektiert wird, wird seine Polarisationsrichtung in Abhängigkeit von der Magnetisierungsrichtung der magneto-optischen Schicht entweder nach rechts oder nach links um einen kleinen Winkel infolge des Kerr-Effektes gedreht. Bei Reflexion an den Kanten der Pits wird aber elliptisch polarisiertes Licht erzeugt, welches das Nebensprechen im magneto-optischen Datensignal verursacht.

Wie bereits erläutert wird der von der Platte reflektierte Lichtstrahl vom Polarisationsstrahlteiler PO1 in Abhängigkeit von seiner Polarisationsrichtung entweder auf den Photodetektor PD1 oder auf den Photodetektor PD2 gerichtet. Durch Differenzbildung der Ausgangssignale der beiden Photodetektoren PD1 und PD2 im Differenzverstärker DV1 wird daher das magneto-optische Datensignal MSN erzeugt, das die in der magnetischen Schicht MO der Platte CD gespeicherten Daten wiedergibt.

Durch Addition der Ausgangssignale der beiden Photodetektoren PD1 und PD2 im Additionsverstärker AV wird das Datensignal PS gewonnen, das die mittels der Pits in der Platte gespeicherten Daten wiedergibt.

Das am Ausgang des Differenzverstärkers DV1 liegende magneto-optische Datensignal MSN, das Figur 3 zeigt, ist aber noch mit dem störenden Nebensprechen behaftet.

Die Erfindung geht nun von der Erkenntnis aus, daß eine λ/4-Platte linear polarisiertes Licht in elliptisch polarisiertes Licht wandelt. Das von der Platte CD reflektierte Licht, das einerseits abhängig von der Magnetisierungsrichtung der magnetischen Schicht in einer bestimmten Ebene linear polarisiert ist und andererseits infolge der Reflexion an den Kanten der Pits auch elliptisch polarisierte Anteile enthält, strahlt zum Prismenstrahlteiler PS2, der es nicht nur zum Polarisationsstrahlteiler PO1, sondern über die 7/2-Platte PL2 und die λ/4-Platte PL3 auch zum Polarisationsstrahlteiler PO2 lenkt. Die λ/4-Platte PL3 wandelt den linear polarisierten Anteil des Lichtes, der das magneto-optische Datensignal repräsentiert, in elliptisch polarisiertes Licht um. Der elliptisch polarisierte Anteil des Lichtes, der durch die Reflexion an den Kanten der Pits verursacht wird, wird dagegen in nahezu linear polarisiertes Licht umgewandelt. Der Polarisationsstrahlteiler PO2 lenkt das Licht in Abhängigkeit von seiner Polarisationsrichtung entweder auf den Photodetektor PD3 oder PD4.

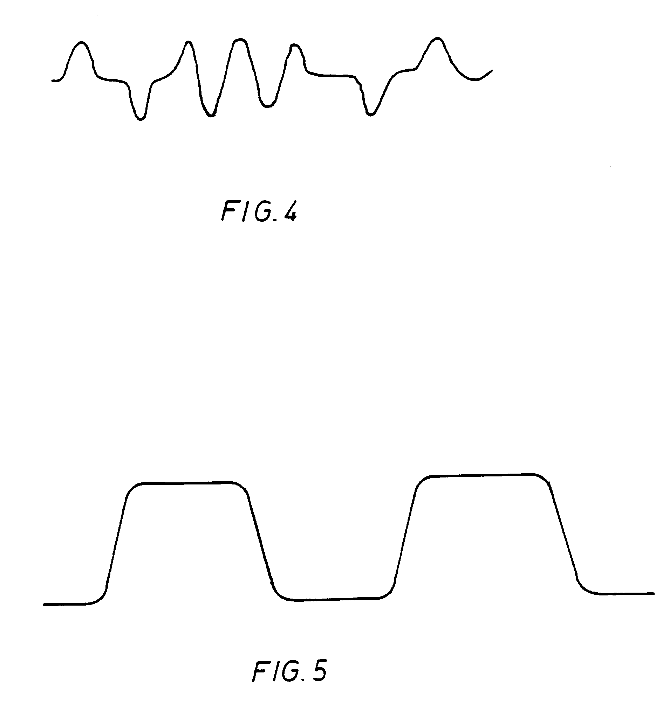

Das durch Differenz der Ausgangssignale der beiden Photodetektoren PD3 und PD4 mittels des Differenzverstärkers DV2 erzeugte Signal ES ist in Figur 4 gezeigt. Weil im Signal ES das magneto-optische Datensignal weitgehend unterdrückt ist, handelt es sich beim Signal ES um das Störsignal, welches das Nebensprechen verursacht.

Durch Subtraktion des Signales ES vom Signal MSN im Differenzverstärker DV3 wird daher am Ausgang des Differenzverstärkers DV3 ein vollkommen von Nebensprechen freies magneto-optisches Datensignal MS erzeugt, das nur die in der magnetischen Schicht MO der Platte CD gespeicherten Daten wiedergibt. Das von Nebensprechen freie magneto-optische Datensignal MS ist in Figur 5 abgebildet.

Die Verstärkung des Verstärkers V, der zum Abgleich der Schaltungsanordnung aus den Differenzverstärkern DV1, DV2 und DV3 dient, kann z.B. experimentell ermittelt werden. Die Verstärkung des Verstärkers V ist so lange zu verändern, bis das Signal MS am Ausgang des Differenzverstärkers DV3 saubere Rechteckimpulse mit steilen Flanken aufweist.

Das Nebensprechen einer Platte hängt davon ab, wie groß der Anteil des elliptisch polarisierten Lichtes im von der Platte reflektierten Licht ist. Je größer der Anteil des elliptisch polarisierten Lichtes ist, desto größer ist das Nebensprechen. Weil aber der Anteil des elliptisch polarisierten Lichtes von Platte zu Platte je nach Qualität der Platte streut, zeigen die Platten unterschiedlich starkes Nebensprechen.

Eine Ausgestaltung der Erfindung sieht deshalb vor, beim Lesen einer Platte die Steilheit der Flanken im Signal MS am Ausgang des Differenzverstärkers DV3 zu messen und die Verstärkung des Verstärkers V so zu regeln, daß die Steilheit der Flanken maximal wird. Durch diese Maßnahme wird die Verstärkung des Verstärkers V optimal an die spezifischen Reflexionseigenschaften der gerade abgetasteten Platte angepaßt. Somit wird unabhängig von den Reflexionseigenschaften der Platten das Nebensprechen bei jeder Platte optimal eliminiert.

Die Erfindung ist für ein optisches Aufzeichnungs- und/oder Wiedergabegerät geeignet, das sowohl optische als auch magneto-optische Aufzeichnungsträger als auch eine Kombination von beiden lesen kann. Die Erfindung läßt sich vorteilhaft in der Datenverarbeitung einsetzen, weil gleichzeitig Daten gelesen und aufgezeichnet werden können. Aber auch bei CD-Spielern und Videoplattenspielern bietet die Erfindung z.B. den Vorteil, daß gleichzeitig mit der Wiedergabe auch Ton und Bild aufgenommen werden können.

## Patentansprüche

1. Optische Abtastvorrichtung, die sowohl zum Lesen eines optischen als auch eines magneto-optischen Aufzeichnungsträgers sowie einer Kombination von optischem und magneto-optischem Aufzeichnungsträger (CD) geeignet ist, auf dem Daten übereinander sowohl in einer magnetischen Schicht (MO) als auch mittels sogenannter Pits (P) gespeichert sind, wobei der Lichtstrahl einer Lichtquelle (LS) auf den Aufzeichnungsträger (CD) fokussiert und vom Aufzeichnungsträger (CD) eine erste λ/2-Platte (PL1) durchstrahlend zu einem ersten Polarisationsstrahlteiler (PO1) reflektiert wird, der den Lichtstrahl in Abhängigkeit von seiner Polarisationsrichtung auf einen ersten oder zweiten Photodetektor (PD1, PD2) lenkt, wobei der Ausgang des ersten und des zweiten Photodetektors (PD1, PD2) mit den Eingängen eines ersten Differenzverstärkers (DV1) verbunden sind, **dadurch gekennzeichet**, daß der Aufzeichnungsträger (CD) den Lichtstrahl eine zweite λ/2-Platte (PL2) und eine λ/4-Platte (PL3) durchstrahlend zu einem zweiten Polarisationsstrahlteiler (PO2) reflektiert, der den Lichtstrahl in Abhängigkeit von seiner Polarisationsrichtung auf einen dritten oder vierten Photodetektor (PD3, PD4) lenkt, daß der Ausgang des dritten und des vierten Photodetektors (PD3, PD4) mit den Eingängen eines zweiten Differenzverstärkers (DV2) verbunden sind, daß der Ausgang des ersten Differenzverstärkers (DV1) mit dem nichtinvertierenden Eingang eines dritten Differenzverstärkers (DV3) verbunden ist, an dessen Ausgang das aus der magnetischen Schicht (MO) des Aufzeichnungsträgers (CD) gewonnene von Nebensprechen freie Datensignal (MS) abnehmbar ist und daß der Ausgang des zweiten Differenzverstärkers (DV2) mit dem invertierenden Eingang des dritten Differenzverstärkers (DV3) verbunden ist.

2. Optische Abtastvorrichtung nach Anspruch 1, **dadurch gekennzeichnet**, daß zwischen dem zweiten Differenzverstärker (DV2) und dem dritten Differenzverstärker (DV3) ein Verstärker (V) zum Abgleich vorgesehen ist.

3. Optische Abtastvorrichtung nach Anspruch 1 oder 2, **dadurch gekennzeichnet**, daß der Lichtstrahl der Lichtquelle (LS) durch eine Kollimatorlinse (KL) und einen ersten Prismenstrahlsteiler (PS1) zu einer Objektivlinse (OL) strahlt, die den Lichtstrahl auf den Aufzeichnungsträger (CD) fokussiert, daß der Aufzeichnungsträger (CD) den Lichtstrahl zurück zum ersten Prismenstrahlteiler (PS1) reflektiert, der ihn zu einem zweiten Prismenstrahlteiler (PS2) lenkt, daß der zweite Prismenstrahlteiler (PS2) einen Lichtstrahl zur ersten λ/2-Platte (PL1) und weiter zum ersten Polarisationsstrahlteiler (PO1) lenkt, daß der zweite Prismenstrahlteiler (PS2) einen Lichtstrahl zur zweiten λ/2-Platte (PL2), weiter zur λ/4-Platte (PL3) und zum zweiten Polarisationsstrahlteiler (PO2) lenkt, daß der erste Polarisationsstrahlteiler (PO1) einen Lichtstrahl über eine erste Linse (L1) auf den ersten Photodetektor (PD1) richtet und einen Lichtstrahl über eine zweite Linse (L2) auf den zweiten Photodetektor (PD2) richtet, daß der zweite Polarisationsstrahlteiler (PO2) einen Lichtstrahl über eine dritte Linse (L3) auf den dritten Photodetektor (PD3) und einen Lichtstrahl über eine vierte Linse (L4) auf den vierten Photodetektor (PD4) richtet, daß der Ausgang des ersten Photodetektors (PD1) mit dem invertierenden Eingang des ersten Differenzverstärkers (DV1) verbunden ist, daß der Ausgang des zweiten Photodetektors (PD2) mit dem nichtinvertierenden Eingang des ersten Differenzverstärkers (DV1) verbunden ist, daß der Ausgang des dritten Photodetektors (PD3) mit dem invertierenden Eingang des zweiten Differenzverstärkers (DV2) verbunden ist, daß der Ausgang des vierten Photodetektors (PD4) mit dem nichtinvertierenden Eingang des zweiten Differenzverstärkers (DV2) verbunden ist und und daß der Ausgang des zweiten Differenzverstärkers (DV2) mit dem Eingang des Verstärkers (V) verbunden ist, dessen Ausgang mit dem invertierenden Eingang des dritten Differenzverstärkers (DV3) verbunden ist.

4. Optische Abtastvorrichtung nach Anspruch 1, 2 oder 3, **dadurch gekennzeichnet**, daß zwischen dem ersten Prismenstrahlteiler (PS1) und dem zweiten Prismenstrahlteiler (PS2) ein dritter Prismenstrahlteiler (PS3) vorgesehen ist, der einen Lichtstrahl über eine fünfte Linse (L5) und eine Zylinderlinse (ZL) auf einen Vierquadrantenphotodetektor (PD5) richtet.

5. Optische Abtastvorrichtung nach Anspruch 4, **dadurch gekennzeichnet**, daß die Ausgänge je zweier diagonal gegenüberliegender Photodioden (A und C bzw. B und D) mit den beiden Additionseingängen bzw. Subtraktionseingängen eines vierten Differenzverstärkers (DV4) verbunden sind, an dessen Ausgang das Fokusfehlersignal (FE) für einen Fokusregelkreis abnehmbar ist.

6. Optische Abtastvorrichtung nach Anspruch 4 oder 5, **dadurch gekennzeichnet**, daß je zwei nebeneinanderliegende Photodioden (A und D bzw C und B) mit den beiden Additionseingängen bzw. den beiden Subtraktionseingängen eines fünften Differenzverstärkers (DV5) verbunden sind.

7. Optische Abtastvorrichtung nach Anspruch 1, 2, 3, 4, 5 oder 6, **dadurch gekennzeichnet**, daß der Ausgang des ersten Fhotodetektors (PD1) und des zweiten Photodetektors (PD2) mit den Eingängen eines Additionsverstärkers (AV) verbunden sind, an dessen Ausgang das aus den Pits des Aufzeichnungsträgers (CD) gewonnene Datensignal (PS) abnehmbar ist.

8. Optische Abtastvorrichtung nach Anspruch 1, 2, 3, 4, 5, 6 oder 7, **dadurch gekennzeichnet**, daß die Verstärkung des Verstärkers (V) so eingestellt wird, daß die Steilheit der Flanken im Signal (MS) am Ausgang des dritten Differenzverstärkers (DV3) einen vorgebbaren Schwellwert erreicht oder maximal wird.

9. Optische Abtastvorrichtung nach Anspruch 8, **dadurch gekennzeichnet,** daß die Verstärkung des Verstärkers (V) automatisch so lange verändert wird, bis die Steilheit der Flanken im Signal (MS) am Ausgang des dritten Differenzverstärkers (DV3) den vorgebbaren Schwellwert erreicht oder maximal wird.

## Claims

1. An optical scanning device suitable for reading not only an optical but also a magneto-optical recording medium as well as a combination of optical and magneto-optical recording medium (CD) on which data are stored on top of each other in a magnetic layer (MO) and also by means of so-called pits (P), the light beam from a light source (LS) being focused onto the recording medium (CD) and reflected from the recording medium (CD) radiating through a first λ/2 disc to a first polarization beam splitter (PO1) which directs the light beam, depending on its direction of polarization, on to a first or second photodetector (PD1, PD2), the output of the first and the second photodetector (PDT, PD2) being connected to the inputs of a first differential amplifier (DV1), characterised in that the recording medium (CD) reflects the light beam, radiating through a second λ/2 disc (PL2) and a λ/4 disc (PL3), to a second polarization beam splitter (PO2) which directs the light beam, depending on its direction of polarization, to a third or fourth photodetector (PD3, PD4), in that the output of the third and the fourth photodetector (PD3, PD4) are connected to the inputs of a second differential amplifier (DV2), in that the output of the first differential amplifier (DV1) is connected to the non-inverting input of a third differential amplifier (DV3), at the output of which there is available the data signal (MS) obtained from the magnetic layer (MO) of the recording medium (CD) and free from crosstalk, and in that the output of the second differential amplifier (DV2) is connected to the inverting input of the third differential amplifier (DV3).

2. An optical scanning device according to claim 1, characterised in that between the second differential amplifier (DV2) and the third differential amplifier (DV3) there is provided an amplifier (V) for balancing.

3. An optical scanning device according to claim 1 or 2, characterised in that the light beam from the light source (LS) radiates through a collimator lens (KL) and a first prismatic beam splitter (PS1) to an objective lens (OL), which focuses the light beam onto the recording medium (CD), in that the recording medium (CD) reflects the light beam back to the first prismatic beam splitter (PS1) which directs it to a second prismatic beam splitter (PS2), in that the second prismatic beam splitter (PS2) directs a light beam to the first λ/2 disc (PL1) and further to the first polarization beam splitter (PO1), in that the second prismatic beam splitter (PS2) directs a light beam to the second λ/2 disc (PL2), further to the λ/4 disc (PL3) and to the second polarization beam splitter (PO2), in that the first polarization beam splitter (PO1) directs a light beam via a first lens (L1) to the first photodetector (PD1) and directs a light beam via a second lens (L2) to the second photodetector (PD2), in that the second polarization beam splitter (PO2) directs a light beam via a third lens (L3) to the third photodetector (PD3) and a light beam via a fourth lens (L4) to the fourth photodetector (PD4), in that the output of the first photodetector (PD1) is connected to the inverting input of the first differential amplifier (DV1), in that the output of the second photodetector (PD2) is connected to the non-inverting input of the first differential amplifier (DV1), in that the output of the third photodetector (PD3) is connected to the inverting input of the second differential amplifier (DV2), in that the output of the fourth photodetector (PD4) is connected to the non-inverting input of the second differential amplifier (DV2), and in that the output of the second differential amplifier (DV2) is connected to the input of the amplifier (V), the output of which is connected to the inverting input of the third differential amplifier (DV3).

4. An optical scanning device according to claim 1, 2 or 3, characterised in that between the first prismatic beam splitter (PS1) and the second prismatic beam splitter (PS2) there is provided a third prismatic beam splitter (PS3), which directs a light beam via a fifth lens (L5) and a cylinder lens (ZL) on to a four quadrant photodetector (PD5).

5. An optical scanning device according to claim 4, characterised in that the outputs of each two photodiodes (A and C, and B and D respectively), which lie diagonally opposite each other, are connected to the two adding inputs or, respectively, subtraction inputs of a fourth differential amplifier (DV4), at the output of which there is available the focusing error signal (FE) for a focusing regulation circuit.

6. An optical scanning device according to claim 4 or 5, characterised in that each two adjacent photodiodes (A and D, or B and C respectively) are connected to the two adding inputs or, respectively, the two subtraction inputs of a fifth differential amplifier (DV5).

7. An optical scanning device according to claim 1, 2, 3, 4, 5 or 6, characterised in that the output of the first photodetector (PD1) and the second photodetector (PD2) are connected to the inputs of an adding amplifier (AV), at the output of which there is available the data signal (PS) obtained from the pits of the recording medium (CD).

8. An optical scanning device according to claim 1, 2, 3, 4, 5, 6 or 7, characterised in that the amplification of the amplifier (V) is so adjusted that the steepness of the edges in the signal (MS) at the output of the third differential amplifier (DV3) attains a predeterminable threshold value or becomes maximal.

9. An optical scanning device according to claim 8, characterised in that the amplification of the amplifier (V) is automatically changed until the steepness of the edges in the signal (MS) at the output of the third differential amplifier (DV3) attains the predeterminable threshold value or becomes maximal.

## Revendications

1. Dispositif de balayage optique pour la lecture d'un support d'enregistrement aussi bien optique que magnéto-optique ou encore d'un support d'enregistrement à la fois optique et magnéto-optique (CD), sur lequel les données sont enregistrées par superposition dans une couche magnétique (MO) et au moyen de « pits » (P), sachant que le faisceau lumineux émis par la source lumineuse (LS) est focalisé sur le support d'enregistrement (CD) qui le réfléchit à travers une première plaque λ/2 (PL1) en direction d'un premier séparateur de faisceau de polarisation (PO1) qui le dirige sur un premier ou un deuxième photodétecteur (PD1, PD2) en fonction de sa direction de polarisation, et que la sortie du premier détecteur (PO1) et la sortie du deuxième détecteur (PO2) sont reliées aux entrées d'un premier amplificateur différentiel (DV1), dispositif de balayage caractérisé en ce que le support d'enregistrement (CD) réfléchit le faisceaux lumineux à travers une deuxième plaque λ/2 (PL2) et une plaque λ/4 (PL3) sur un deuxième séparateur de faisceau de polarisation (PO2) qui le dirige sur un troisième ou un quatrième photodétecteur (PD3, PD4) en fonction de sa direction de polarisation, que la sortie du troisième détecteur (PD3) et la sortie du quatrième (PD4) sont reliées aux entrées d'un deuxième amplificateur différentiel (DV2), que la sortie du premier amplificateur différentiel (DV1) est reliée à l'entrée non inverseuse d'un troisième amplificateur (DV3), dont la sortie fournit le signal de données (MS) exempt de parasitage inductif obtenu à partir de la couche magnétique (MO) du support d'enregistrement, et que la sortie du deuxième amplificateur différentiel (DV2) est reliée à l'entrée inverseuse du troisième amplificateur différentiel (DV3).

2. Dispositif de balayage optique selon la revendication 1, caractérisé en ce qu'un amplificateur (V) est prévu entre le deuxième amplificateur différentiel (DV2) et le troisième amplificateur différentiel (DV3) pour le réglage.

3. Dispositif de balayage optique selon l'une quelconque des revendications 1 ou 2, caractérisé en ce que le faisceau lumineux de la source lumineuse (LS) traverse un collimateur (KL) et un séparateur de faisceaux prismatique (PS1) avant de toucher un objectif (OL), qui le focalise sur le support d'enregistrement magnéto-optique (CD), que le support d'enregistrement (CD) le renvoie au premier séparateur de faisceau prismatique (PS1), qui le dirige sur un deuxième séparateur de faisceau prismatique (PS2), que le deuxième séparateur de faisceau prismatique (PS2) dirige un faisceau lumineux sur une première plaque λ/2 (PL1), puis sur le premier séparateur de faisceau de polarisation (PO1), que le deuxième séparateur de faisceau prismatique (PS2) dirige un faisceau lumineux sur la deuxième plaque λ/2 (PL2), puis sur la plaque λ/4 (PL3) et sur le deuxième séparateur de faisceau de polarisation (PO2), que le premier séparateur de faisceau de polarisation (PO1) dirige un faisceau lumineux à travers une lentille (L1) sur le premier photodétecteur (PD1 ) et un faisceau lumineux à travers une deuxième lentille (L2) sur le deuxième photodétecteur (PD2), que le deuxième séparateur de faisceau de polarisation (PO2) dirige un faisceau lumineux à travers une troisième lentille (L3) sur le troisième photodétecteur (PD3) et un faisceau lumineux à travers une quatrième lentille (L4) sur le quatrième photodétecteur (PD4), sachant que la sortie du premier photodétecteur (PD1) est reliée à l'entrée inverseuse du premier amplificateur différentiel (DV1), que la sortie du deuxième photodétecteur (PD2) est reliée à l'entrée non inverseuse du premier amplificateur différentiel (DV1), que la sortie du troisième photodétecteur (PD3) est reliée à l'entrée inverseuse du deuxième amplificateur différentiel (DV2), que la sortie du quatrième photodétecteur (PD4) est reliée à l'entrée non inverseuse du deuxième amplificateur différentiel (DV2) et que la sortie du deuxième amplificateur différentiel (DV2) est reliée à l'entrée de l'amplificateur (V) dont la sortie est reliée à l'entrée inverseuse du troisième amplificateur différentiel (DV3).

4. Dispositif de balayage optique selon l'une quelconque des revendications 1, 2 ou 3, caractérisé en ce qu'entre le premier séparateur de faisceau prismatique (PST) et le deuxième séparateur de faisceau prismatique (PS2), un troisième séparateur de faisceau prismatique (PS3) est prévu qui dirige un faisceau lumineux à travers une cinquième lentille (L5) et une lentille cylindrique (ZL) sur un photodétecteur à quatre quadrants (PD5).

5. Dispositif de balayage optique selon la revendication 4, caractérisé en ce que les sorties de respectivement deux photodiodes (A et C ou B et D), diagonalement opposées, sont reliées aux deux entrées d'addition ou de soustraction d'un quatrième amplificateur différentiel (DV4) dont la sortie fournit le signal d'erreur de focalisation (FE) pour le circuit de réglage de la focalisation.

6. Dispositif de balayage optique selon l'une quelconque des revendications 4 ou 5, caractérisé en ce que deux photodiodes juxtaposées (A et D ou C et B) sont reliées aux deux entrées d'addition ou aux deux entrées de soustraction d'un cinquième amplificateur différentiel (DV5).

7. Dispositif de balayage optique selon la revendication 1, 2, 3, 4, 5 ou 6, caractérisé en ce que la sortie du premier photodétecteur (PD1) et la sortie du deuxième photodétecteur (PD2) sont reliées aux entrées d'un amplificateur d'addition (AV) dont la sortie fournit le signal de données obtenu à partir des pits du support d'enregistrement (CD).

8. Dispositif de balayage optique selon l'une quelconque des revendications 1, 2, 3, 4, 5, 6 ou 7, caractérisé en ce que le gain de l'amplificateur (V) est réglé de telle manière que la pente des flancs du signal (MS) fourni à la sortie du troisième amplificateur différentiel (DV3) atteigne un seuil donné ou la valeur maximale.

9. Dispositif de balayage optique selon la revendication 8, caractérisé en ce que le gain de l'amplificateur (V) est automatiquement modifié jusqu'à ce que la pente des flancs du signal (MS) fourni à la sortie du troisième amplificateur différentiel (DV3) atteigne un seuil donné ou la valeur maximale.
